# EUROPÄISCHE PATENTANMELDUNG

(11) **EP 1 990 348 A2**
(43) Veröffentlichungstag der Anmeldung: **12.11.2008**
(21) Anmeldenummer: 08103339.1
(22) Anmeldetag: 02.04.2008
(51) Int. Cl.: C07F 15/00

(54) **Schwefelhaltige Metathesekatalysatoren**

(30) Priorität: 03.05.2007 DE 102007020694
(71) Anmelder: Evonik Degussa GmbH, 45128 Essen (DE)
(72) Erfinder: Kadyrov, Renat, 60389, Frankfurt (DE); Szadkowska, Anna, 01-960, Warszawa (PL); Grela, Karol, 01-471, Warsaw (PL); Barbasiewicz, Michal, 91052, Erlangen (DE)

(57) **Zusammenfassung**

Die vorliegende Erfindung betrifft neue Übergangsmetallkomplexe der Formeln (I), 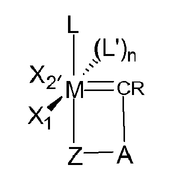 ein Verfahren zur Herstellung dieser Übergangsmetallkomplexe, sowie die Verwendung der Übergangsmetallkomplexe als Katalysatoren in Metathesereaktionen.

## Beschreibung

Die vorliegende Erfindung betrifft neue Übergangsmetallkomplexe der Formel (I), 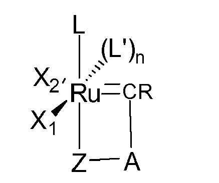 ein Verfahren zur Herstellung dieser Übergangsmetallkomplexe, sowie die Verwendung der Übergangsmetallkomplexe als Katalysatoren in Metathesereaktionen.

Unter Metathese versteht man eine chemische Reaktion bei der formal Substituenten an Doppel- bzw. Dreifachbindungen ausgetauscht werden. Zu den Metathesereaktionen zählen die Oligomerisation und Polymerisation von acyclischen Dienen (ADMET) oder Polymerisation von zyklischen Olefinen (ROMP) sowie die Synthese von zyklischen Verbindungen unterschiedlicher Größen durch Ringschlussmetathese (RCM). Darüber hinaus sind gekreuzte Metathesen unterschiedlicher Alkene (CM) und Metathese von Alkenen mit Alkinen (Enyne Metathese) bekannt. Zahlreiche, grundlegende Arbeiten haben wesentlich zum Verständnis dieser übergangsmetallkatalysierten Reaktion beigetragen (Übersicht siehe: Handbook of Metathesis, Ed. R.H. Grubbs, WILEY-VCH, Weinheim, 2003).
Für die Olefin-Metathese steht eine Vielzahl an Katalysatorsystemen zur Verfügung. Speziell durch Arbeiten von Schrock wurden Alkylidenkomplexe des Molybdäns und Wolframs als erste wohldefinierte Katalysatoren eingeführt. (J.S. Murdzek, R.R. Schrock, Organometallics, 1987, 6, 1373-1374). Als nachteilig stellte sich jedoch die hohe Empfindlichkeit dieser Komplexe heraus. In jüngster Zeit haben sich die Ruthenium-Alkylidenkomplexe mit Phosphanliganden etabliert (P. Schwab et al. Angew. Chem. Int. Ed. Engl. 1995, 34, 2039-2041; P. A. van der Schaaf et al. J. Organometallic Chem. 2000, 606, 65-74). Diese Komplexe besitzen eine hohe Toleranz gegenüber polaren funktionellen Gruppen und sind Luft- und Wasserstabil. Durch die Einführung von N-heterocyclischen Carbenen (NHC) als Liganden konnte nicht nur die Aktivität dieser Systeme weiter gesteigert, sondern auf Grund der wesentlich variablen Ligandensphäre auch neuartige Steuermöglichkeiten für die Umsetzungen zugänglich gemacht werden (DE 19815275 und T. Weskamp, W.C. Schattenmann, M. Spiegler, W.A. Herrmann Angew. Chem. 1998, 110, 263-2633). Eine weitere deutliche Steigerung der katalytischen Aktivität erreicht man durch Ergänzung mit einem koordinativ labilerem Liganden (DE 19902439 und T. Weskamp, F. J. Kohl, W. Hieringer, D. Gleich, W. A. Herrmann Angew. Chem., 1999, 111, 2573-2576). Repräsentative Beispiele stellen die Komplexe A und B dar.

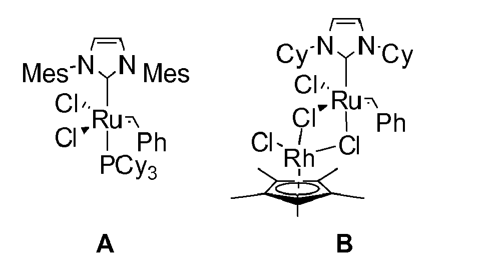

In Gessler et al. (Tetrahedron Lett. 2000, 41, 9973-9976) und in Garber et al. (J. Am. Chem. Soc. 2000, 122, 8168-8179) sind Rutheniumkomplexe beschrieben, welche neben einem N-heterocyclischen Carben-Liganden einen Isopropoxybenzyliden-Liganden aufweisen. Diese so genannten "grünen" Katalysatoren besitzen eine höhere Stabilität und können ggf. recycliert werden.

Das Patent WO 9900397 beschreibt Katalysatoren C und D, welche sich besonders gut für ROMP eigenen. Die weiteren Beispiele von derartigen hochaktiven Metathese Katalysatoren (E und F) sind in der Anmeldung WO 2005094345 beschrieben.

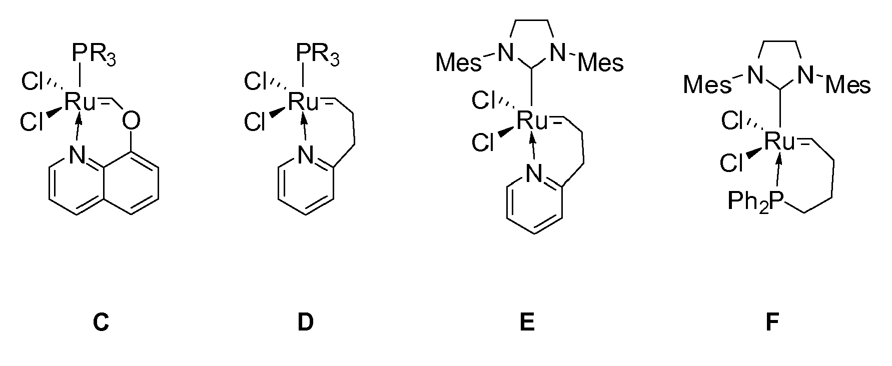

Es sind einige Beispiele für Metathesekatalysatoren mit schwefelhaltigen Einheiten in der Seitenkette in der Literatur beschrieben worden (Komplex H in P. A. van der Schaaf et al. J. Organometallic Chem. 2000, 606, 65-74, Komplex J1 in Patent CN 2005100803792 und Komplex J2 in M. Bieniek et al. J. Organomet. Chem. 2006, 691, 5289).

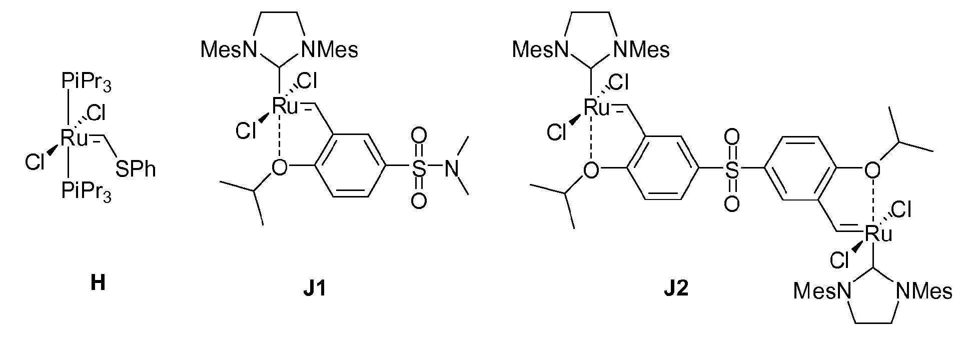

Nichtsdestotrotz bestand weiterhin Bedarf an neuen Katalysatorsystemen für die Olefin-Metathese, welche stabil sind und zudem eine hohe ggf. steuerbare Aktivität zeigen und als alternative zu den existierenden Katalysatoren benutzt werden können. Insbesondere sollten die Katalysatoren ganzheitlich betrachtet den Katalysatoren des Standes der Technik vom ökonomischen und/oder ökologischen Standpunkt aus betrachtet überlegen sein.

Überraschenderweise wurden nun Verbindungen der Formel(I) gefunden 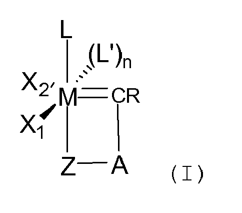 worin
M für Ru oder Os steht, vorzugsweise für Ru,
L und L' unabhängig voneinander gleich oder verschieden für einen neutralen Elektronendonor stehen,
X1 und X2 gleich oder verschieden sind und für einen anionischen Liganden stehen,
R für Wasserstoff, cyclische, geradkettige oder verzweigtkettige Alkylreste, oder für ggf. substituierte Arylreste steht,
Z für eine schwefelhaltige direkt am Metall koordinierende Einheit steht, und
A eine Brücke, welche die Einheit Z mit dem Carben-Kohlenstoff kovalent verbindet, und n die Zahl 0 oder 1, bevorzugt 0 bedeutet.
Die Olefin-Metathese mit den erfindungsgemäßen Komplexverbindungen zeichnet sich durch geringe Aktivität bei Raumtemperatur und insbesondere schnelle Aktivitätssteigerung mit Erhöhung der Temperatur aus. Die erfindungsgemäßen Verbindungen können dadurch als thermoschaltbare Katalysatoren verwendet werden. Darüber hinaus sind die erfindungsgemäßen Komplexverbindungen luftstabile Verbindungen und besitzen bemerkenswerte Thermostabilität, bei gegenüber den Katalysatoren des Standes der Technik nicht wesentlich geringerer Aktivität.

Durch Variation der neutralen Elektronendonorliganden L und L' kann die Aktivität und Selektivität der Komplexe weiterhin gezielt gesteuert werden. Vorzugsweise besitzen die erfindungsgemäßen Komplexverbindungen für L gesättigte oder ungesättigte NHC (N-heterocyclische Carbene) als Liganden. Diese zeichnen sich neben ihrer Variationsvielfalt zur Modellierung der Ligandensphäre insbesondere durch Bereitstellung von hohen Katalysatoraktivitäten aus. Derartige Liganden sind in folgender Literatur beispielhaft erwähnt (DE 19815275 und T. Weskamp, W.C. Schattenmann, M. Spiegler, W.A. Herrmann Angew. Chem. 1998, 110, 263-2633; DE 19902439 und T. Weskamp, F. J. Kohl, W. Hieringer, D. Gleich, W. A. Herrmann Angew. Chem., 1999, 111, 2573-2576; EP1180108). L' kann L oder die in WO9951344 als neutrale E-Donor-Liganden aufgeführte Strukturen annehmen.

In den erfindungsgemäßen Komplexverbindungen handelt es sich bei der oben genannten schwefelhaltigen Einheit Z vorzugsweise um Reste aus der Reihe: Thiol, Thioether, Thioacetale, Disulfide, Dithiocarbonsäuren, Thioester, Thioketone, Thioaldehyde, Thiocarbamate, Thiourethane, Phosphinsulfide, Thiophosphate, Thiophosphonate, Sulfonate, Sulfone, Sulfonamide oder schwefelhaltige Heterocyclen, wobei gewährleistet sein muss, dass die Verbindung Z-M, vorzugsweise Z-Ru, über das Schwefelatom oder ein am Schwefel befindliches Sauerstoffatom gebildet wird. Das wird vorzugsweise dann der Fall sein, wenn der koordinierende Ringschluss zwischen dem Schwefel oder dem Sauerstoffatom und dem Metallatom einen 5-, 6- oder 7-Ring bildet.

Für den verbrückenden Molekülteil A kann der Fachmann im Prinzip einen ihm für den vorliegenden Zweck in Frage kommenden Rest verwenden, bevorzugt ist ein Kohlenstoffgerüst, welches aus 2 bis 4 Kohlenstoffatomen besteht, besonders bevorzugt ist eine C₂-Brücke, wobei ggf. beide C-Atome eine sp²-Hybridisierung aufweisen können und der Rest vorteilhafterweise einen Teil eines 3-, 4-, 5-, 6-, 7- oder 8 gliedrigen Ringsystems bildet. Die eben angesprochenen Ringsysteme können gegebenenfalls ein oder mehrere Heteroatome aufweisend. Als solche kommen insbesondere Sauerstoff-, Schwefel- oder Stickstoff-Atome. Sie können über die oben beschriebene sp²-Hybridisierung hinaus weiter ungesättigt sowie gegebenenfalls aromatischer Natur sein. Sie können einfach oder mehrfach mit weiteren Resten, insbesondere solchen ausgewählt aus der Gruppe bestehend aus (C₁-C₈)-Alkyl, (C₁-C₈) -Alkoxy, (C₆-C₁₈)-Aryloxy, HO-(C₁-C₈)-Alkyl, (C₂-C₈)-Alkoxyalkyl, (C₆-C₁₈)-Aryl, (C₇-C₁₉)-Aralkyl, (C₃-C₁₈)-Heteroaryl, (C₄-C₁₉)-Heteroaralkyl, (C₁-C₈) -Alkyl- (C₆-C₁₈) -Aryl, (C₁-C₈) -Alkyl- (C₃-C₁₈) -Heteroaryl, (C₃-C₈)-Cycloalkyl, (C₁-C₈)-Alkyl-(C₃-C₈)-Cycloalkyl, (C₃-C₈)-Cycloalkyl-(C₁-C₈)-Alkyl substituiert sein.
Darüber hinaus können die Ringsysteme auch einen oder mehrere Substituenten aufweisen, insbesondere solchen ausgewählt aus der Gruppe bestehend aus Halogen, Hydroxy, Carbonsäuren, Ester, Silylether, Thioether, Thioacetale, Imine, Silylenolether, Ammoniumsalze, Amide, Nitrile, Perfluoralkyl-Gruppen, Ketone, Aldehyde, Carbamate, Carbonate, Urethane, Sulfonate, Sulfone, Sulfonamide, Nitro-Gruppen, Organosilan-Einheiten " Phosphon- und Phosphat-Gruppe, und Phosphoniumsalze.

In den erfindungsgemäßen Komplexverbindungen handelt es sich bei den anionischen Liganden X1 und X2 vorzugsweise um anorganischen oder organischen Anionen aus der Reihe Halogenide, insbesondere F⁻, Cl⁻, Br⁻, Pseudohalogenide, Hydroxide, Alkoxide oder Amide (RO⁻, R₂N⁻), Phenole, Thiole, Thiophenole, Carboxylate, Carbonate, Sulfonate, Sulfate, Phosphate und Phosphonate, Allyl, und Cyclopentadienyl stehen, wobei unter den Pseudohalogeniden vorzugsweise Cyanid, Rhodanid, Cyanat, Isocyanat, Thiocyanat und Isothiocyanat verstanden wird, wobei die Reste R die unten genannte Definition erfüllen.

Ganz besonders bevorzugt sind Komplexverbindungen der allgemeinen Formel (II) und (III). 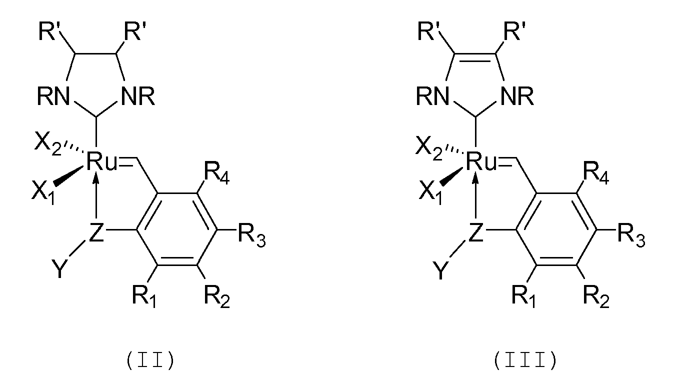 Darin steht Z für -S-, -S(O)- und S(O)₂-,
X1 und X2 nehmen die oben angegebenen Reste an,
Y, R, R' und R₁ bis R₄ sind unabhängig voneinander wählbare Reste aus der Gruppe Wasserstoff, (C₁-C₈) -Alkyl, (C₁-C₈) -Alkoxy, (C₆-C₁₈) -Aryloxy, HO- (C₁-C₈) -Alkyl, (C₂-C₈) -Alkoxyalkyl, (C₆-C₁₈) -Aryl, (C₇-C₁₉) -Aralkyl, (C₃-C₁₈) -Heteroaryl, (C₄-C₁₉) -Heteroaralkyl, (C₁-C₈) -Alkyl- (C₆-C₁₈) -Aryl, (C₁-C₈) -Alkyl- (C₃-C₁₈) -Heteroaryl, (C₃-C₈) -Cycloalkyl, (C₁-C₈) -Alkyl- (C₃-C₈) -Cycloalkyl, (C₃-C₈) -Cycloalkyl- (C₁-C₈) -Alkyl . Außerdem können die Reste R' und R₁ bis R₄ unabhängig voneinander bedeuten:
(Cyclo)Alkylthio, (Hetero)Arylthio, Alkyl/Arylsulfonyl Alkyl/Arylsulfinyl, jeweils wahlweise substituiert mit (C₁-C₈) -Alkyl, (C₁-C₈) -Alkoxy, (C₆-C₁₈) -Aryloxy, HO- (C₁-C₈) - Alkyl, (C₂-C₈) -Alkoxyalkyl, (C₆-C₁₈)-Aryl, Perfluoralkyl, Halogen, (C₁-C₈) -Acyloxy, (C₁-C₈) -Acyl (C₁-C₈) -Alkoxycarbonyl, (C₁-C₈) -Alkylsulfonyl oder (C₁-C₈) -Alkylsulfinyl, (C₆-C₁₈) -Arylsulfonyl oder (C₆-C₁₈)-Arylsulfinyl.
R₁ bis R₄ können ebenfalls eine Nitro-Gruppe, Sulfat, Amin, Ammoniumsalz, Phospat und Phosphoniumsalz bedeuten.
Die Reste R' können mit einem oder mehreren der Reste R₁ bis R₄ in cyclischen Verbindungen miteinander verknüpft vorliegen. Auch der Rest R₁ kann mit dem Rest Y unter Ausbildung einer (hetero)cyclischen Verbindung miteinander verknüpft sein.

Die erfindungsgemäßen Verbindungen, insbesondere die der Formel (I) und(II) werden vorzugsweise durch Austauschreaktion des Phosphanliganden in Verbindungen der Formel (IV) durch Liganden der Formel (V) hergestellt 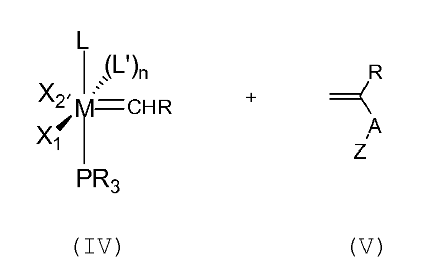 worin die Reste und Indices die oben genannten Bedeutungen annehmen und PR₃ für einen Phosphanliganden, vorzugsweise für Tricyclohexylphosphan steht.

Die Herstellung der erfindungsgemäßen Verbindungen, insbesondere die der Formel (I) und (II) aus Verbindungen der Formel(VI) erfolgt vorzugsweise in einem Lösungsmittel, besonders bevorzugt in Toluol, Benzol, Tetrahydrofuran oder Dichlormethan, ganz besonders bevorzugt in Dichlormethan. Die Umsetzung findet vorzugsweise in Gegenwart von Verbindungen statt, die in der Lage sind, Phosphane abzufangen, besonders bevorzugt in Gegenwart von CuCl₂ und CuCl, ganz besonders bevorzugt in Gegenwart von CuCl. Dabei wird vorzugsweise in Gegenwart von äquimolaren Mengen bzw. eines Überschusses an Phosphanfänger, bezogen auf Verbindungen der Formel (IV), gearbeitet. Wird als Phosphanfänger CuCl eingesetzt, so werden besonders bevorzugt 1 bis 1,5 Äquivalente eingesetzt. Es werden vorzugsweise 0,9 bis 3 Äquivalente der Verbindungen der Formel(V), bezogen auf Verbindungen der Formel(IV) eingesetzt, besonders bevorzugt 1 bis 2 Äquivalente. Die Umsetzung erfolgt vorzugsweise bei Temperaturen von 20 bis 80°C, besonders bevorzugt bei Temperaturen von 30 bis 50°C. Die Umsetzung wird vorzugsweise unter Inertgas wie beispielsweise Stickstoff oder Argon durchgeführt.

Die erfindungsgemäßen Verbindungen (I), insbesondere die der Formel (II) und (III) können als Katalysatoren in Metathesereaktionen eingesetzt werden. Sie können beispielsweise in Ringschluss-Metathesen eingesetzt werden. Besonders bevorzugt werden sie in ROMP und ADMET-Polymerisationsreaktionen eingesetzt.

Als Alkylreste sind anzusehen insbesondere (C₁-C₈)-Alkylreste, wie z.B. Methyl, Ethyl, n-Propyl, Isopropyl, n-Butyl, Isobutyl, sec-Butyl, tert-Butyl, Pentyl, Hexyl, Heptyl oder Octyl samt aller ihrer Bindungsisomeren.
Der Rest (C₁-C₈) -Alkoxy entspricht dem Rest (C₁-C₈) -Alkyl mit der Maßgabe, dass dieser über ein Sauerstoffatom an das Molekül gebunden ist.
Als (C₂-C₈)-Alkoxyalkyl sind Reste gemeint, bei denen die Alkylkette durch mindestens eine Sauerstoffunktion unterbrochen ist, wobei nicht zwei Sauerstoffatome miteinander verbunden sein können. Die Anzahl der Kohlenstoffatome gibt die Gesamtzahl der im Rest enthaltenen Kohlenstoffatome an. Eine (C₃-C₅)-Alkylenbrücke ist eine Kohlenstoffkette mit drei bis fünf C-Atomen, wobei diese Kette über zwei verschiedene C-Atome an das betrachtete Molekül gebunden ist.
Die in den vorangehenden Absätzen beschriebenen Reste können einfach oder mehrfach mit Halogenen und/oder N-, O-, P-, S-, Si-atomhaltigen Resten substituiert sein. Dies sind insbesondere Alkylreste der oben genannten Art, welche eines oder mehrere dieser Heteroatome in ihrer Kette aufweisen bzw. welche über eines dieser Heteroatome an das Molekül gebunden sind.

Unter (C₃-C₈)-Cycloalkyl versteht man Cyclopropyl, Cyclobutyl, Cyclopentyl, Cyclohexyl bzw. Cycloheptylreste etc. Diese können mit einem oder mehreren Halogenen und/oder N-, O-, P-, S-, Si-atomhaltige Reste substituiert sein und/oder N-, O-, P-, S-Atome im Ring aufweisen, wie z. B. 1-, 2-, 3-, 4-Piperidyl, 1-, 2-, 3-Pyrrolidinyl, 2-, 3-Tetrahydrofuryl, 2-, 3-, 4-Morpholinyl.

Ein (C₃-C₈)-Cycloalkyl-(C₁-C₈)-Alkylrest bezeichnet einen wie oben dargestellten Cycloalkylrest, welcher über einen wie oben angegebenen Alkylrest an das Molekül gebunden ist.

(C₁-C₈)-Acyloxy bedeutet im Rahmen der Erfindung einen wie oben definierten Alkylrest mit max. 8 C-Atomen, welcher über eine COO-Funktion an das Molekül gebunden ist.

(C₁-C₈)-Acyl bedeutet im Rahmen der Erfindung einen wie oben definierten Alkylrest mit max. 8 C-Atomen, welcher über eine CO-Funktion an das Molekül gebunden ist.

Unter einem Arylrest wird insbesondere ein (C₆-C₁₈)-Arylrest verstanden, welcher ein aromatischer Rest mit 6 bis 18 C-Atomen ist. Insbesondere zählen hierzu Verbindungen wie Phenyl-, Naphthyl-, Anthryl-, Phenanthryl-, Biphenylreste oder an das betreffende Molekül annelierte Systeme der vorbeschriebenen Art, wie z.B. Indenylsysteme, welche ggf. mit Halogen, (C₁-C₈) -Alkyl, (C₁-C₈) -Alkoxy, NH₂, NH (C₁-C₈) -Alkyl, N((C₁-C₈)-Alkyl)₂, OH, CF₃, NH (C₁-C₈) -Acyl, N ((C₁-C₈) -Acyl)₂, (C₁-C₈) -Acyl, (C₁-C₈) -Acyloxy substituiert sein können.

Ein (C₇-C₁₉)-Aralkylrest ist ein über einen (C₁-C₈) -Alkylrest an das Molekül gebundener (C₆-C₁₈)-Arylrest.

Ein (C₃-C₁₈)-Heteroarylrest bezeichnet im Rahmen der Erfindung ein fünf-, sechs- oder siebengliedriges aromatisches Ringsystem aus 3 bis 18 C-Atomen, welches Heteroatome wie z. B. Stickstoff, Sauerstoff oder Schwefel im Ring aufweist. Als solche Heteroaromaten werden insbesondere Reste angesehen, wie 1-, 2-, 3-Furyl, wie 1-, 2-, 3-Pyrrolyl, 1-, 2-, 3-Thienyl, 2-, 3-, 4-Pyridyl, 2-, 3-, 4-, 5-, 6-, 7-Indolyl, 3-, 4-, 5-Pyrazolyl, 2-, 4-, 5-Imidazolyl, Acridinyl, Chinolinyl, Phenanthridinyl, 2-, 4-, 5-, 6-Pyrimidinyl. Dieser Rest kann mit den gleichen Resten substituiert sein wie der oben genannte Arylrest.

Unter einem (C₄-C₁₉) -Heteroaralkyl wird ein dem (C₇-C₁₉)-Aralkylrest entsprechendes heteroaromatisches System verstanden.

Als Halogene (Hal) kommen Fluor, Chlor, Brom und Iod in Frage.

### 1. Synthese von 2-(Isopropylthio)benzoesäure

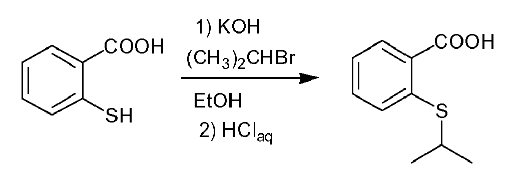

Zu einer Suspension von Thiosalicylsäure (16.7 g; 109 mmol; Fluka) und Isopropylbromid (20.0 g; 163 mmol) in Ethanol (125 mL) wurden KOH-Plätzchen (17.3 g; 433 mmol) unter kräftigem Rühren langsam zugegeben. Nach 6 h Rühren wurde die Reaktionsmischung in Wasser-Eis Mischung (1200 mL) gegossen und mit konzentrierte Salzsäure (ca. 50 ml) sauer gestellt. Das ausgefallene Produkt wurde abfiltriert, mit 50% wässrigem Ethanol (2 x 100 mL) gewaschen und im Vakuum getrocknet. Ausbeute 6.4 g (30 %).
IR (film): ν 3084, 3058, 2962, 2924, 2865, 1828, 1625, 1588, 1463, 1365, 1243, 1197, 1155, 1049, 991, 912, 769, 746 cm⁻¹; ¹H NMR (200 MHz, DMSO-d₆) δ 1.74-1.82 (d, 6H, J = 2.2 Hz), 4.02-4.12 (septet, 1H, J = 6.6 Hz), 7.70 (m, 1H), 7.66-7.72 (m, 1H), 7.95-8.00 (m, 2H), 8.36-8.42 (m, 1H); ¹³C NMR (50 MHz, DMSO-d₆) δ 22.4, 35.3, 124.6, 128.3, 131.1, 132.1, 140.3, 167.2, 205.6; MS (EI) m/z (rel intensity) 196 (21, [M]^{+.}), 154(13), 137(11), 136(100), 108(21), 69(8), 43(13), 41(13), 39(12) ; HRMS (EI): calcd for [M]^{+.} (C₇H₁₂O₂S): 196. 05580; found 196.05604.

### 2. Synthese von 2-(Isopropylthio)benzaldehyd

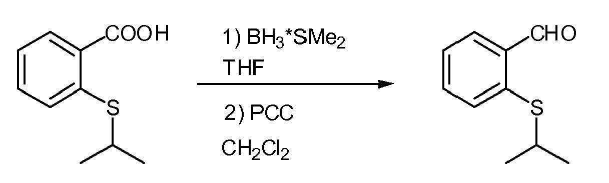

Zu einer Lösung von 2-(Isopropylthio)benzoesäure (0.98 g, 5 mmol) in THF (10 mL) wurde Boran-Dimethylsulfid Komplex (0.8 mL, 8 mmol) bei 3 °C unter Argon und kräftigem rühren zugetropft. Nach 30 min Nachrühren im Eis-Bad wurde die Reaktion für weitere 24 h bei RT stehen gelassen. Methanol (1.5 mL) wurde vorsichtig zugegeben und die Reaktionslösung im Vakuum eingeengt. Der Rückstand wurde in Diethylether (50 ml) aufgenommen, mit gesättigter K₂CO₃-Lösung und NaCl-Lösung gewaschen. Wässrige Lösungen wurden zusätzlich mit Ether extrahiert, die vereinigten organischen Phasen über M_{g}SO₄ getrocknet, filtriert und das Lösungsmittel im Vakuum entfernt. Der Rückstand wurde in Dichlormethan (30 ml) aufgenommen, mit PCC (1.20 g, 5.6 mmol) vorsichtig versetzt und bei Raumtemperatur 36 h gerührt. Der Rückstand nach Lösungsmittel Entfernung wurde durch Säulenchromatography an Kieselgel (Hexan : Ethylacetat (10:1) gereinigt. Ausbeute 0.69 g. (76%) .
IR (film): ν 3686, 3601, 3362, 3063, 2968, 2929, 2867, 2744, 1950, 1692, 1648, 1587, 1559, 1460, 1442, 1383, 1368, 1287, 1242, 1195, 1156, 1128, 1073, 1062, 1052, 1039, 931, 879, 845, 825, 777, 679, 660, 635, 509 cm-1; 1H NMR (200 MHz, CDCl3) δ 1.30-1.40 (d, 6H, J = 6.6 Hz), 3.38-3.48 (septet, 1H, J = 6.8 Hz), 7.25-7.60 (m, 3H), 7.84-7.92 (m, 1H), 10.54 (d, 1H, J = 0.63 Hz); 13C NMR (50 MHz, CDCl3) δ 22.9, 38.8, 126.7, 130.1, 132.4, 133.8, 135.8, 140.3, 191.9; MS (EI) m/z (rel intensity) 180(66, [M]+.), 165(18), 138(49), 137(100), 110 (35), 109(41), 104 (57), 69 (11), 66 (11), 65 (26), 43 (25), 41 (19), 39 (17) ; HRMS (EI): calcd for [M]+. (C10H120S): 180. 07122; found 180.07148.

### 3. Synthese von 2-Isopropylsulfinylbenzaldehyd

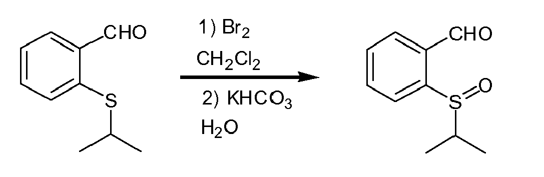

Eine Lösung von 2-(Isopropylthio)benzaldehyd (0.33 g, 1.83 mmol) in Dichloromethan (10 mL) wurde mit wässrige KHCO₃-Lösung (1.18g in 10 mL H₂O) versetzt. Unter kräftigem Rühren wurde eine Lösung von Brom (0.310g, 1.93 mmol) in Dichloromethan (1.5 mL) zugetropft. Nach 20 min Nachrühren wurde eine Spatelspitze von Na₂SO₃ zugegeben und die organisch Phase abgetrennt, mit gesättigter NaCl-Lösung gewaschen und über M₉SO₄ getrocknet, filtriert und das Lösungsmittel im Vakuum entfernt. Der Rückstand wurde durch Säulenchromatographie an Kieselgel (Hexan : Ethylacetat (3:1 bis 1:1) gereinigt. Das Produkt fiel als gelbliches Öl an. Ausbeute 0.304 g, (85%).
IR (film): ν 3447, 2963, 2917, 2864, 2738, 1702, 1628, 1607, 1482, 1439, 1380, 1264, 1227, 1183, 1158, 1121, 1105, 1037, 992, 950, 932, 852, 803, 751, 697, 635, 593, 578, 535, 506, 446, 418 cm-1; 1H NMR (200 MHz, CDCl3) δ 0.86-0.94 (d, 3H, J = 6.8 Hz), 1.50-1.56 (d, 3H, J = 7.1 Hz), 2.90-3.10 (septet, 1H, J = 6.8 Hz), 7.60-8.00 (m, 1H), 8.16-8.22 (m, 1H), 10.01-10.06 (d, 1H J = 0.63 Hz); 13C NMR (50 MHz, CDCl3) δ 21.7, 38.2, 124.4, 130.5, 133.9, 135.2, 144.9, 198.5; MS (EI) m/z (rel intensity) 180(66, [M]+.), 165(18), 138(49), 137(100), 110 (35), 109(41), 104(57), 69(11), 66(11), 65(26), 43(25), 41 (19), 39 (17) ; HRMS (EI): calcd for [M] +. (C7H1002S): 178. 08162; found 178.08148.

### 4. Wittig Olefinierung

Zu einer Suspension von Methyltriphenylphosphonium Bromid (0.690 g, 1.93 mmol, Aldrich) in 8 mL THF wurde n-BuLi (1.5 M, 1.4 mL, 2.07 mmol) bei -78 °C unter einer Argonatmosphäre zugetropft. Die gelbe Reaktionslösung wurde innerhalb von 1 h auf Raumtemperatur erwärmt. Nach erneutem Abkühlen auf -78°C wurde eine Lösung des entsprechenden Aldehyds (1.39 mmol) in THF (5 mL) gegeben, danach langsam auf Raumtemperatur erwärmt und 1 h bei dieser Temperatur nachgerührt. Nach Zugabe einer gesättigten NH₄Cl-Lösung wurde die wässrige Phase mit Ethylacetat extrahiert (4 x 20 mL). Die vereinigten organischen Phasen wurden über MgSO₄ getrocknet und das Lösungsmittel im Vakuum entfernt. Der Rückstand wurde durch Säulenchromatographie an Kieselgel (Cyclohexan : Ethylacetat (2:8) gereinigt.

4a. 2-Isopropylthio-1-vinylbenzol 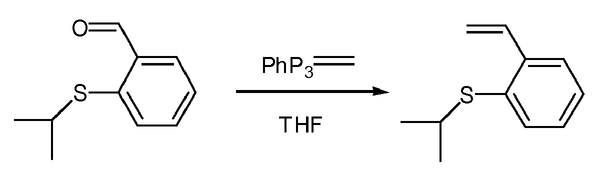 Ausbeute 74 %.
IR (film): ν 3084, 3058, 2962, 2924, 2865, 1828, 1625, 1588, 1463, 1365, 1243, 1197, 1155, 1049, 991, 912, 769, 746 cm⁻¹; ¹H NMR (500 MHz, CDCl₃) δ 1.26 (d, 6H, J = 6.7 Hz), 3.24-3.33 (septet, 1H, J = 6.7 Hz), 5.30 (dd, 1H, J = 1.2, 11 Hz), 5. 67 (dd, 1H, J = 1.2, 17.5 Hz), 7.18-7.27 (m, 2H), 7.35 (dd, 1H, J = 11, 17.5 Hz), 7.42-7.47 (m, 1H), 7. 52-7. 57 (m, 1H); ¹³C NMR (125 MHz, CD₃CCD₃) δ 23.1, 38.8, 115.3, 125.9, 127.5, 127.9, 133.8, 133.9, 135.3, 140.2; MS (EI) m/z (rel intensity) 178 (9, [M]⁺·) , 136(10), 135(100), 134(14), 91(18), 77(2), 65 (1), 43 (2) ; HRMS (EI): calcd for [M]^{+·} (C₁₁H₁₄S) : 178. 08162; found 178.08148.

### 4b. 2-Isopropylsulfinyl-1-vinylbenzol

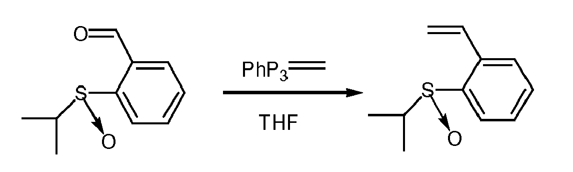

Ausbeute 71 %.
IR (film): ν 3686, 3603, 3411, 2982, 2933, 2870, 2543, 2049, 1969, 1940, 1856, 1727, 1628, 1606, 1562, 1465, 1440, 1414, 1384, 1366, 1193, 1158, 1125, 1069, 1024, 990, 956, 926, 891, 875, 638, 582, 549, 506 cm⁻¹; ¹H NMR (400 MHz, CDCl₃) δ 1.06 (d, 3H, J = 7.0 Hz), 1.3 (d, 3H, J = 7.0 Hz), 2.83-2.93 (septet, 1H, J = 7.1 Hz), 5.41 (dd, 1H, J = 0.83, 11 Hz), 5. 77 (dd, 1H, J = 0.96, 17.3 Hz), 6.93-7.02 (q, 1H, J = 11 Hz), 7.44-7.58 (m, 2H), 7.86-7.89 (m, 1H, J = 11, 17.5 Hz); ¹³C NMR (100 MHz, CDCl₃) δ 13.1, 17.1, 53.2, 117.8, 124.8, 125.7, 128.3, 130.7, 131.6, 135.9, 139.8; MS (EI) m/z (rel intensity) 194 (4, [M]^{+.}), 152(13), 137(10), 136(11), 135(100), 134(11), 91(21), 77(11), 51(7), 45(8), 43(11), 41(9), 39(8); HRMS (EI): calcd for [M]^{+.} (C₁₁H₁₄OS): 194. 07654; found 194.07703.

### 5. Ru-Komplex Synthese

Zu einer Suspension von Kupfer(I)chlorid (13 mg, 0.12 mmol) und Tricyclohexylphosphan[1,3-bis(2,4,6-trimethylphenyl)-4,5-dihydrimidazol-2-yliden][benzyliden]ruthenium(IV)dichlorid (102 mg; 0.12 mmol) in 2 mL Dichlormethan wurde eine Lösung des entsprechenden Styrolderivats (0.132 mmol) in 3 mL Dichlormethan gelöst zugegeben. Nach 20 min Rühren bei 40°C wurde die Reaktionslösung im Vakuum eingeengt. Der Rückstand wurde in 20 ml Ethylacetat aufgenommen und über eine Pasteurpipette mit Kieselgel filtriert. Das Filtrat wurde wieder im Vakuum eingeengt und der Rückstand mit sehr wenig Ethylacetat und kaltem Pentan gewaschen.

### 5a. Komplex SR1

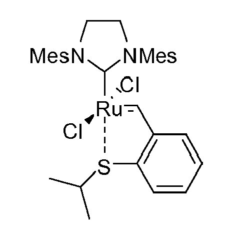

Grünes mikrokristallines Feststoff, Ausbeute 86 %.
IR (film): ν 2952, 2908, 2862, 1606, 1479, 1420, 1382, 1262, 1154, 1055, 1033, 863, 843, 798, 742 cm⁻¹; ¹H NMR (500 MHz, CDCl₃) δ 0. 99 (d, 6H, J = 6. Hz), 2.37 (s, 6H), 2.48 (s, 12H), 3. 18 (septet, 1H, J = 6.6 Hz), 4.14 (s, 4H), 6.73 (d, 1H, J = 7.5 Hz), 7.03 (s, 4H), 7.11-7.20 (m, 1H); 7.40-7.52 (m, 2H), 17.33 (s, 1H); ¹³C NMR (125 MHz, CD₃COCD₃) δ 19.5, 21.0, 51.7, 121.8, 123.3, 129.3, 129.4, 133.6, 136.4, 138.1, 138.6, 140.0, 140.3, 156.2, 162.0, 210.0, 285.7;
MS (EI) m/z (rel intensity) 642 (8, [M]⁺·) , 530 (10), 528 (18), 527(14), 526(13), 525(10), 305(40), 304(100), 303(91), 289 (19), 287(10), 166 (25), 163(12), 159(12), 158(22), 149 (19), 146(12), 145 (14), 144 (13), 135(14), 124(32), 91(45), 77(15), 71(11), 57(14), 55(12), 45(10), 44(46), 43(33), 42(12), 41 (35), 40 (31), 39 (20), 38 (15), 36 (46) ; HRMS (EI) : calcd for [M]⁺· (C₃₁ H₃₈N₂³⁵Cl₂ S ¹⁰²Ru): 642. 11762; found 642.11634.

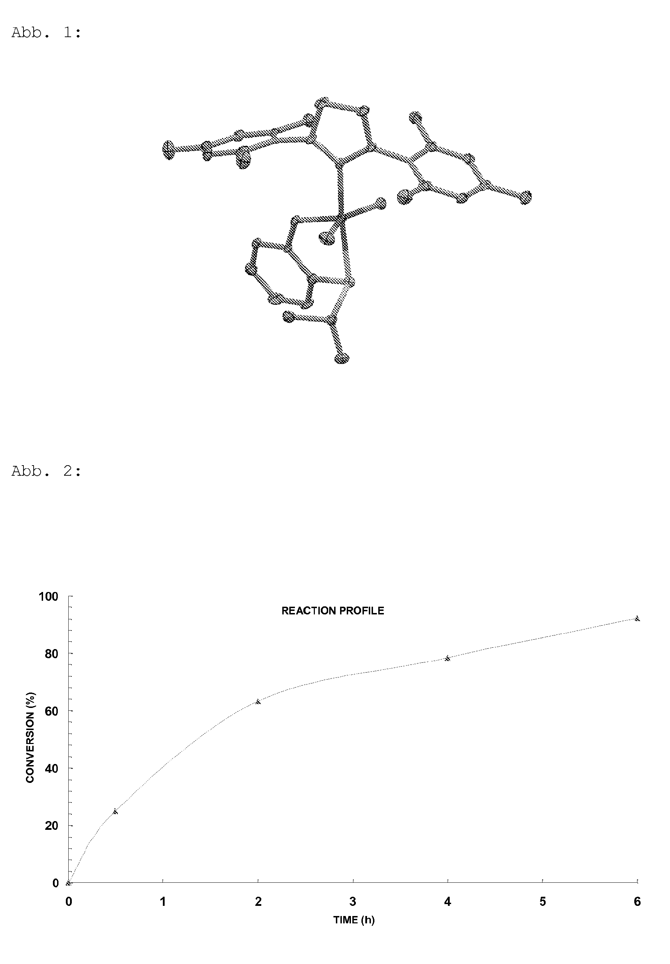

Abb. 1: Kristallstruktur von Komplex SR1.

### 5b. Komplex SOR1

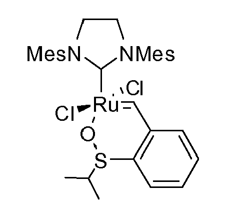

Hell-grünes mikrokristallines Feststoff, Ausbeute 72 %:
IR (film): ν 3447, 2963, 2917, 2738, 1702, 1628, 1607, 1482, 1439, 1380, 1264, 1227, 1183, 1158, 1121, 1105, 1037, 992, 950, 932, 852, 803, 751, 697, 635, 593, 578, 535, 506, 446, 418 cm⁻¹; ¹H NMR (500 MHz, CDCl₃) δ 1.05 (q, 6H, J = 6.7 Hz), 2.29 (m, 3H), 2.35-2.45 (m, 12H), 2.55 (s, 3H), 3.61 (septet, 1H, J = 6.7 Hz), 4.15 (s, 4H), 6.74 (d, 1H, J = 7.6 Hz), 6.95-7.05 (m, 4H), 7.34 (m, 1H), 7. 65 (m, 1H) 7.72-7.78 (m, 1H), 16.81 s, 1H); ¹³C NMR (125 MHz, CDCl₃) δ 21.0, 51.7, 121.0, 127.5, 128.9, 129.4, 129.6, 129.7, 133.9, 135.4, 138.1, 138.5, 138.9, 139.0, 156.2, 207.2, 301.3; MS (ESI; m/z): 658 [M - Cl + CH₃CN]⁺.

### 6. RCM von N,N-Diallyl-p-toluolsulfonamid

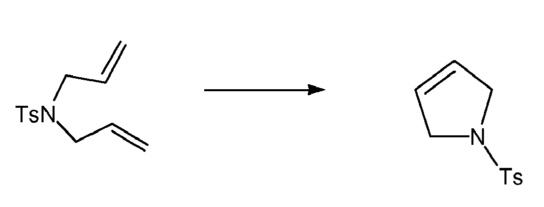

### 6a. In Gegenwart von Komplex SR1

Eine Lösung von N,N-Diallyl-p-toluolsulfonamid (0.350 mmol, 84 mg) in 17.5 ml Toluol wurde mit 5 Mol% der Katalysator (0.018 mmol) SR1 aus der Beispiel 5a unter Argon versetzt und bei 80°C gerührt. 200 µL einer Aliquote Reaktionslösung wurden zu 500 µL von 2M Ethyl-vinyl-ether Lösung in Methylenchlorid zugegen und Mittels GC analysiert. Nach 24 h wurde 51% Umsatz zum gewünschten N-p-Toluolsulfonyl-2,5-dihydropyrrol festgestellt.

### 6b. In Gegenwart von Komplex SOR1

Eine Lösung von N,N-Diallyl-p-toluolsulfonamid (0.350 mmol, 84 mg) in 17.5 ml Dichlormethan wurde mit 5 Mol% der Katalysator (0.018 mmol) SOR1 aus der Beispiel 5b unter Argon versetzt und bei Raumtemperatur gerührt. 200 µL einer Aliquote Reaktionslösung wurden zu 500 µL von 2M Ethyl-vinyl-ether Lösung in Methylenchlorid zugegen und Mittels GC analysiert. Der Verlauf der Reaktion ist in der Abbildung 2 dargestellt.

Abbildung 2: RCM von N,N-Diallyl-p-toluolsulfonamid in Gegenwart von 5 Mol% Komplex SOR1 in Methylenchlorid bei Raumtemperatur.

### 7. RCM von Diethyl-2-allyl-2-(2-methylallyl)malonat

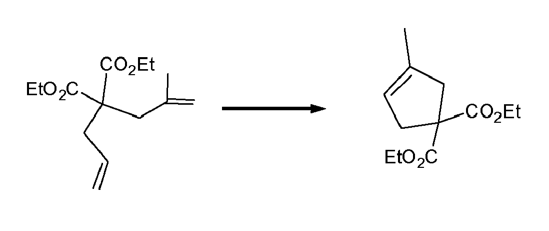

Eine Lösung von Diethyl-2-allyl-2-(2-methylallyl)malonat (0.350 mmol) in 17.5 ml Toluol wurde mit 1 Mol% des Katalysator (0.0035 mmol) SOR1 aus Beispiel 5b unter Argon versetzt und bei 80°C gerührt. 200 µL der Reaktionslösung wurden zu 500 µL von 2M Ethyl-vinyl-ether Lösung in Methylenchlorid zugegen und Mittels GC analysiert. Nach 1 h wurde 99% Umsatz zum gewünschten 4,4-Bis(ethoxycarbonyl)-1-methylcyclopenten festgestellt.

### 8. En-yn Metathese von 3-Allyloxy-3,3-diphenylpropin

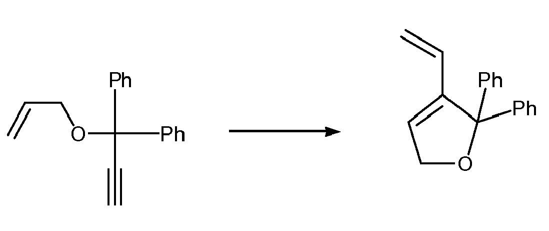

Eine Lösung von 3-Allyloxy-3,3-diphenylpropin (0.350 mmol) in 17.5 ml Toluol wurde mit 5 Mol% der Katalysator (0.018 mmol) SR1 aus der Beispiel 5a unter Argon versetzt und bei 80°C gerührt. 200 µL der Reaktionslösung wurden zu 500 µL von 2M Ethyl-vinyl-ether Lösung in Methylenchlorid zugegeben und Mittels GC analysiert. Nach 1 h wurde 99% Umsatz zum gewünschten 3-Ethenyl-2,5-dihydro-2,2-diphenylfuran festgestellt.

## Patentansprüche

1. Verbindungen der Formeln(I), 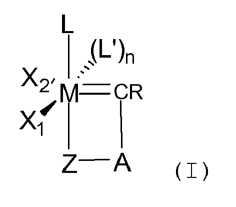 worin
M für Ru, Os steht
L und L' unabhängig voneinander gleich oder verschieden für einen neutralen Elektronendonor stehen,
X1 und X2 gleich oder verschieden sind und für einen anionischen Liganden stehen,
R für Wasserstoff, einen cyclischen, geradkettigen oder verzweigtkettigen Alkyl- oder ggf. substituierten Arylrest steht,
Z für eine schwefelhaltige direkt am Metall koordinierende Einheit steht, und
A eine Brücke, welche die Einheit Z mit dem Carben-Kohlenstoff kovalent verbindet, und n die Zahl 0 oder 1, bevorzugt 0 bedeutet.

2. Verbindungen nach Anspruch 1,
**dadurch gekennzeichnet, dass**
L ein gesättigter oder ungesättigter NHC-Ligand ist.

3. Verbindungen nach Anspruch 1 und/oder 2,
**dadurch gekennzeichnet, dass**
Z eine Einheit enthaltend Thiol, Thioether, Thioacetale, Disulfide, Dithiocarbonsäuren, Thioester, Thioketone, Thioaldehyde, Thiocarbamate, Thiourethane, Phosphinsulfide, Thiophosphate, Thiophosphonate, Sulfonate, Sulfone, Sulfonamide oder schwefelhaltige Heterocyclen ist, wobei gewährleistet sein muss, dass die Verbindung Z-Ru über das Schwefelatom oder ein am Schwefel befindliches Sauerstoffatom gebildet wird.

4. Verbindung nach einem der vorherigen Ansprüche,
**dadurch gekennzeichnet, dass**
der Molekülteil A eine C₂-Brücke bildet, in der beide C-Atome eine sp²-Hybridisierung aufweisen.

5. Verbindung nach einem oder mehreren der vorhergehenden Ansprüche,
**dadurch gekennzeichnet, dass**
es sich bei X1 und X2 um anorganische oder organische Anionen aus der Reihe Halogenide, insbesondere F⁻, Cl⁻, Br⁻, Pseudohalogenide, Hydroxide, Alkoxide oder Amide, Phenole, Thiole, Thiophenole, Carboxylate, Carbonate, Sulfonate, Sulfate, Phosphate und Phosphonate, Allyl⁻, und Cyclopentadienyl⁻ stehen, wobei unter den Pseudohalogeniden vorzugsweise Cyanid, Rhodanid, Cyanat, Isocyanat, Thiocyanat und Isothiocyanat verstanden wird.

6. Verfahren zur Herstellung von Verbindungen nach Anspruch 1,
**dadurch gekennzeichnet, dass**
man die Verbindungen durch Austauschreaktion des Phosphanliganden in Verbindungen der Formel (IV) durch Liganden der Formel (V) hergestellt 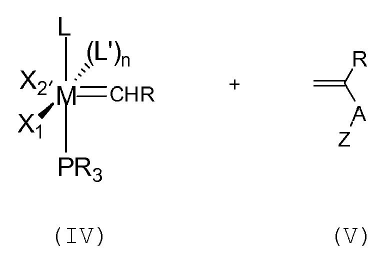 worin die Reste und Indices die in den vorhergehenden Ansprüchen angegebenen Bedeutungen annehmen und PR₃ für einen Phosphanliganden, vorzugsweise für Tricyclohexylphosphan steht.

7. Verwendung der Verbindungen nach Anspruch 1 in Metathesereaktionen.
